(19) Europäisches Patentamt / European Patent Office / Office européen des brevets

(11) **EP 4 664 785 A1**

(12) **DEMANDE DE BREVET EUROPEEN**

(43) Date de publication:
**17.12.2025   Bulletin 2025/51**

(51) Classification Internationale des Brevets (IPC):
**H04B 7/06** (2006.01)     **H04B 7/08** (2006.01)

(21) Numéro de dépôt: **25181769.8**

(52) Classification Coopérative des Brevets (CPC):
**H04B 7/088; H04B 7/0617**

(22) Date de dépôt: **10.06.2025**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **12.06.2024   FR 2406222**

(71) Demandeur: **THALES**
**92190 Meudon (FR)**

(72) Inventeurs:
• **ROUGERIE, Sébastien**
**31100 TOULOUSE (FR)**
• **CALMETTES, Thibaud**
**31100 TOULOUSE (FR)**

(74) Mandataire: **Lavoix**
**2, place d'Estienne d'Orves**
**75441 Paris Cedex 09 (FR)**

(54) **PROCÉDÉ DE RÉCEPTION DE SIGNAUX RF, ET PROGRAMME D'ORDINATEUR ET DISPOSITIF DE RÉCEPTION ASSOCIÉS**

(57) La présente invention concerne un procédé de réception de signaux RF par un réseau d'antennes comprenant m antennes, le procédé comprenant les étapes suivantes mises en œuvre à chaque instant t :
- réception (111) de m signaux élémentaires par les m antennes ;
- formation (112) d'un signal résultant à partir des m signaux élémentaires en utilisant une loi de phase déterminée pour l'instant t ;
- traitement (113) monocanal du signal résultant pour déterminer une pluralité de caractéristiques de ce signal ;
- estimation (114) d'une nouvelle loi de phase pour l'instant t+1 à partir des caractéristiques du signal résultant et des signaux élémentaires.

FIG.2

**Description**

La présente invention concerne un procédé de réception de signaux RF (c'est-à-dire signaux radiofréquence).

La présente invention concerne également un programme d'ordinateur et un dispositif de réception associés à ce procédé.

Plus particulièrement, le domaine technique de l'invention est celui de la formation de faisceaux numériques vers les cibles dans les communications spatiales, en utilisant un réseau d'antennes.

De manière connue en soi, une première difficulté rencontrée dans ce domaine est la calibration du réseau afin de compenser toutes les distorsions de phases et d'amplitudes relatives entre les chaines de réception. Cette calibration doit être effectuée en continue, sachant que ces distorsions peuvent évoluer dans le temps (comme par exemple l'effet de la température).

Une seconde difficulté est la connaissance précise des directions d'arrivée des cibles. En fonction des applications, la trajectoire de la cible ne peut pas être connue à l'avance et / ou l'attitude de la station n'est pas connue.

Pour compenser les distorsions d'amplitude et de phase relative, les solutions classiques sont l'établissement d'une procédure de calibration. Cette procédure de calibration peut être mise en œuvre suivant des techniques connues en soi.

Selon un premier exemple d'une telle technique, un système d'émission de signaux de référence est installé proche du réseau d'antennes. La principale difficulté de cette technique est l'implémentation locale du système d'émission. Outre les problèmes d'énergie pour alimenter les émetteurs, il faut respecter les contraintes de champs lointains (souvent > 100m) ainsi que le domaine angulaire à couvrir (souvent élévation > 5°). La combinaison des deux contraintes rend souvent impossible d'utiliser des mâts d'émission qui doivent respecter une hauteur importante. Des drones peuvent être utilisés, mais leur exploitation peut être contraignante (cout du drone et de sa charge utile, autorisation de vol sur site, utilisation par beau temps uniquement), et leur capacité limité à suivre une trajectoire de référence (surtout en présence de vent) fait que l'approche reste limitée à de petits réseaux d'antennes où l'exigence sur la référence angulaire n'est pas trop importante.

Selon un autre exemple, un système d'auto-calibration peut être utilisé. Le principe de ce système est l'utilisation d'un signal de calibration émis par la station puis réinjecté dans les voies RF pour estimation des dispersions d'amplitude et de phase. L'inconvénient de cette approche est la nécessité de rajouter des coupleurs directifs dans le système. Cela a pour effet de rajouter des pertes dans les chaines RF, ce qui se traduit par une baisse du ratio G/T (de l'anglais « gain-to-noise-temperature »). Cela demande donc, pour un ratio G/T donné, de sur-dimensionner le réseau afin de compenser cette perte ce qui peut impliquer un coût important. Enfin, le diagramme d'antenne n'est en général pas compensé avec cette approche, ce qui peut engendrer des pertes de dépointage.

L'état de l'art propose de nombreux algorithmes de formation de faisceaux robustes aux dispersions de calibration.

Ainsi, par exemple, l'algorithme « Robust Capon Beamforming » (RCB) est une méthode qui considère que le vecteur directionnel actuel du signal utile (celui de l'antenne en fonctionnement et qui est inconnu) appartient à une sphère centrée sur l'extrémité du vecteur directionnel supposé (celui du modèle ou celui obtenu au moment de la calibration) et de rayon sqrt(ε). Cet algorithme propose donc d'intégrer dans l'optimisation Capon, la contrainte de minimisation entre le vecteur directionnel modélisé et inconnu. Cela nécessite la connaissance du vecteur directionnel supposé ou en d'autres termes, les directions d'arrivée du signal cible et un modèle de diagramme d'antenne. De plus, elle nécessite de connaitre l'incertitude sur les dispersions d'amplitude et de phase (via le paramètre sqrt(ε)). Enfin, le coût calculatoire est important, en particulier dû à la recherche d'un paramètre lors de l'optimisation.

Le document EP3544193 propose de fusionner l'utilisation d'une méthode d'estimation du vecteur directionnel (de type « Weiss et Friedlander »), de l'algorithme MUSIC (de l'anglais « MUltiple SIgnal Classification ») et d'un formateur de faisceaux MVDR (de l'anglais « Minimum Variance Distortionless Response »). Bien que performante, cette méthode itérative nécessite un très grand nombre de calculs (50 plus important qu'un formateur classique) ainsi qu'une connaissance approximative des défauts à compenser.

Les documents EP2356754 et EP1816758 proposent un « pré-codeur » ou un « guide de codification » pour la mise en place de la formation de faisceaux. Cette approche nécessite la connaissance a priori d'une partie du signal.

La présente invention a pour but de remédier aux inconvénients de l'état de l'art et de proposer une solution permettant de réaliser une formation de faisceaux sans calibrer à l'avance le réseau d'antennes, et sans avoir besoin de connaitre la trajectoire à l'avance de la cible.

À cet effet, l'invention concerne un procédé de réception de signaux RF par un réseau d'antennes comprenant m antennes, le procédé comprenant les étapes suivantes mises en œuvre à chaque instant t :

- réception de m signaux élémentaires par les m antennes ;
- formation d'un signal résultant à partir des m signaux élémentaires en utilisant une loi de phase déterminée pour l'instant t ;
- traitement monocanal du signal résultant pour déterminer une pluralité de caractéristiques de ce signal ;

3      **EP 4 664 785 A1**      4

- estimation d'une nouvelle loi de phase pour l'instant t+1 à partir des caractéristiques du signal résultant et des signaux élémentaires.

Le procédé selon l'invention se base ainsi sur la poursuite d'un élément connu du signal afin de mettre en place naturellement la loi de phase. Cet élément du signal peut être connu a priori, ou alors être issu directement de la démodulation via l'approche séquentielle proposée.

La solution proposée ne nécessite pas la connaissance a priori des directions d'arrivée, ce qui relaxe la nécessité de connaitre l'attitude du porteur ainsi que la trajectoire de la cible.

Suivant d'autres aspects avantageux de l'invention, le procédé comprend une ou plusieurs des caractéristiques suivantes, prises isolément ou suivant toutes les combinaisons techniquement possibles :

- chaque caractéristique du signal résultant correspond à l'un des éléments choisi dans le groupe comprenant :

  - phase ;
  - fréquence Doppler ;
  - démodulation des symboles ;
  - retard Doppler ;
  - indicateur de rapport signal sur bruit ;

- l'étape d'estimation de la nouvelle loi de phase comprend les sous-étapes suivantes :

  - détermination d'une première corrélation correspondant à la corrélation entre les signaux élémentaires et un signal de référence ;
  - détermination d'une deuxième corrélation correspondant à l'autocorrélation des signaux élémentaires ;
  - détermination de la nouvelle loi de phase à partir de la première corrélation et de la deuxième corrélation ;

- le signal de référence est déterminé à partir desdites caractéristiques du signal résultant ;
- la nouvelle loi de phase est déterminée en outre en fonction d'un code d'étalement d'un satellite poursuivi ;
- l'étape d'estimation de la nouvelle loi de phase est effectuée par une unité MMSE ;
- lors d'une itération initiale desdites étapes, la nouvelle loi de phase est déterminée en fonction d'une fréquence Doppler recherchée ;
- ladite fréquence Doppler est déterminée à partir des éphémérides d'au moins un satellite poursuivi.

L'invention concerne également un programme d'ordinateur comportant des instructions logicielles qui, lorsqu'elles sont exécutées par un ordinateur, mettent en œuvre le procédé tel que défini ci-dessus.

L'invention concerne également un dispositif de réception de signaux RF comprenant des moyens techniques mettant en œuvre le procédé tel que défini ci-dessus.

L'invention apparaîtra plus clairement à la lecture de la description qui va suivre, donnée uniquement à titre d'exemple non limitatif, et faite en référence aux dessins dans lesquels :

[Fig. 1] la figure 1 est une vue schématique d'un dispositif de réception de signaux RF selon l'invention ; et
[Fig. 2] la figure 2 est un organigramme d'un procédé de réception de signaux RF selon l'invention, le procédé étant mis en œuvre par le dispositif de réception de la figure 1.

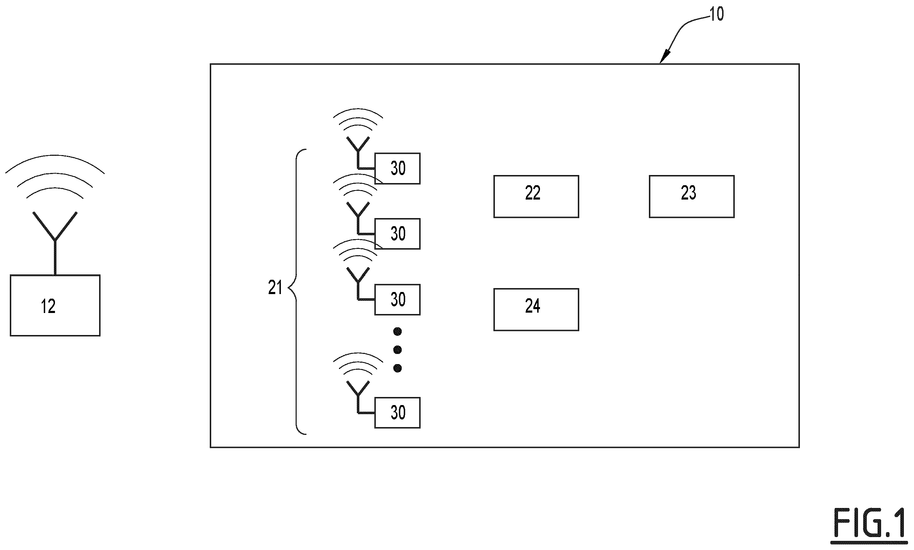

La figure 1 présente une vue schématique d'un dispositif de réception 10 de signaux RF (c'est-à-dire des signaux radiofréquence) issu d'un émetteur 12.

Le dispositif de réception 10 est par exemple embarqué dans un porteur se déplaçant par exemple dans l'espace. En variante, le porteur se déplace dans les airs ou alors sur une surface terrestre.

L'émetteur 12 est configuré pour émettre des signaux radiofréquence, par exemple des signaux TM (TéléMétrie ou « TeleMetry » en anglais) de type DVBS2 ou CCSDS (de l'anglais « Consultative Committee for Space Data Systems »). Alternativement, l'émetteur 12 est configuré pour émettre des signaux de type CDMA (de l'anglais « Code division multiple access »), par exemple des signaux de navigation de type GNSS (de l'anglais « Global Navigation Satellite System »). Chaque signal émis par l'émetteur 12 comprend une information utile qui est encodée dans le signal correspondant en utilisant des techniques choisies en fonction du type du signal.

Le dispositif de réception 10 est configuré pour recevoir des signaux RF émis par l'émetteur 12 et pour les décoder afin d'en extraire l'information utile.

Pour ce faire, le dispositif de réception 10 comprend un réseau d'antennes 21, une unité de formation de faisceaux 22, une unité de traitement 23 et une unité d'estimation 24.

La réseau d'antennes 21 comprend m antennes 30 disposées sur un support selon une configuration connue. En particulier, chaque antenne 30 est apte à recevoir des signaux RF, issus notamment de l'émetteur 12, selon son diagramme de rayonnement. Les signaux reçus par les différentes antennes 30 diffèrent l'un des autres, compte tenu des diagrammes de rayonnement différents et/ou positions physiques différentes des antennes 30. Chaque signal reçu par une antenne 30 est appelé ensuite signal élémentaire.

L'unité de formation 22 permet de former un signal résultant à partir de l'ensemble des signaux élémentaires reçus par les antennes 30 en utilisant une loi

3

de phase. Une telle loi de phase permet de prendre en compte le décalage en phase de différentes antennes 30, compte tenu de leurs diagrammes de rayonnement et/ou positions physiques différent(e)s.

L'unité de traitement 23 permet de traiter chaque signal résultant formé pour en extraire l'information utile ainsi que des caractéristiques de ce signal ayant permis son codage et/ou transmission. En particulier, chaque caractéristique du signal résultant correspond à l'un des éléments choisi dans le groupe comprenant :

- phase ;
- fréquence Doppler ;
- démodulation des symboles ;
- retard, Doppler
- indicateur du rapport signal sur bruit : C/N0 ou SNR (« Signal to Noise Ratio » en anglais).

L'unité d'estimation 24 permet de déterminer la loi de phase devant être utilisée par l'unité de formation de faisceaux 22 pour chaque itération suivante, comme cela sera expliqué plus en détail par la suite. L'unité d'estimation 24 correspond par exemple à un estimateur de type MMSE (de l'anglais « Minimum Mean Squared Error »). Cette unité d'estimation 24 est connectée aux antennes 30, à l'unité de formation de faisceaux 22 et à l'unité de traitement 23.

Chacune des unités 22, 23, 24 précitées se présente par exemple au moins partiellement sous la forme d'un circuit logique programmable tel qu'un FPGA (de l'anglais « Field Programmable Gate Array »), ou encore d'un circuit intégré, tel qu'un ASIC (de l'anglais « Application Specific Integrated Circuit »). En variante ou alternativement, au moins l'une de ces unités 22, 23, 24 comprend une composante logicielle configurée pour être mise en œuvre par un ou plusieurs processeurs et une mémoire vive. Une telle composante logicielle est apte à être stockée sur tout moyen de stockage physique adapté à cet effet.

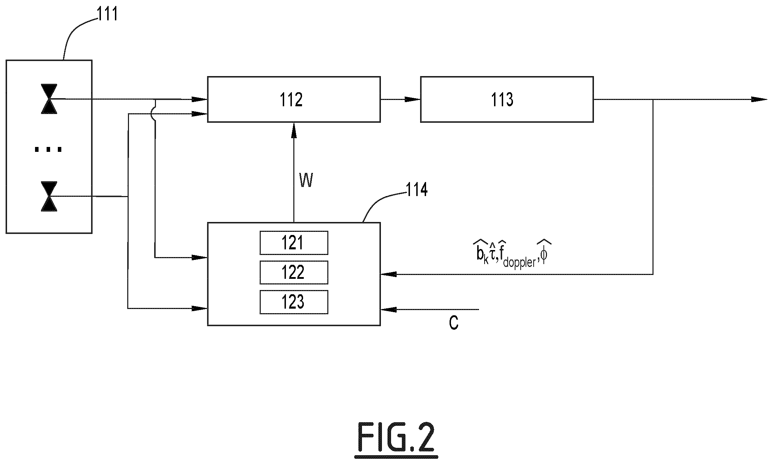

Le dispositif de réception 10 permet de mettre en œuvre un procédé de réception de signaux RF qui sera désormais expliqué en référence à la figure 2 présentant un organigramme de ses étapes.

Initialement, il est considéré que l'émetteur 12 émet des signaux RF d'un type prédéterminé, tel que défini ci-dessus.

Les étapes suivantes sont mises en œuvre de manière itérative à chaque instant t.

Lors d'une étape 111, les antennes 30 réceptionnent m signaux élémentaires correspondant aux signaux RF émis par l'émetteur 12.

Lors d'une étape 112, l'unité de formation 22 forme un signal résultant $y_{BF}(t)$ à partir des signaux élémentaires reçus $\boldsymbol{y}(t)$ en utilisant une loi de phase $\boldsymbol{w}$ déterminée pour cet instant t. Autrement dit :

$$y_{BF}(t) = \boldsymbol{w}^H \boldsymbol{y}(t)$$

où $H$ signifie un opérateur de transposée conjuguée.

En particulier, pour toute itération autre qu'une itération initiale, la loi de phase pour l'instant t est déterminée lors de l'itération précédente des étapes (c'est-à-dire à l'instant t-1), comme cela sera expliqué en détail par la suite.

Pour l'itération initiale (c'est-à-dire l'instant t0), la loi de phase est déterminée à partir d'une fréquence Doppler recherchée. Cette fréquence est déterminée à son tour en fonction du type des signaux émis par l'émetteur 12. Par exemple, lorsqu'il s'agit de signaux GNSS, cette fréquence Doppler est déterminée à partir des éphémérides.

Cela peut se faire par exemple en faisant les opérations suivantes :

- une décomposition en vecteurs / valeurs propres d'une première corrélation R (telle qu'elle sera expliqué ci-dessous) et une sélection des vecteurs propres associées aux valeurs propres les plus fortes ($\boldsymbol{u}_0$, ..., $\boldsymbol{u}_K$) ;
- pour chaque vecteur propre, formation d'un signal

  $$y_k(t) = u_K^H \times \boldsymbol{y}(t)$$ ;

- si un pattern du signal utile est détecté sur le vecteur propre n (par exemple si le Doppler estimé est égal au Doppler cible, ou si le test Chi2 est ok pour une post-corrélation sur un mot de synchronisation, ou si le test Chi2 est ok pour une post-corrélation sur un code d'étalement), alors la première loi de phase est donnée par l'expression $\boldsymbol{w} = \boldsymbol{u}_n$.

Lors d'une étape 113, l'unité de traitement 23 effectue un traitement monocanal du signal résultant $y_{BF}(t)$ pour déterminer une pluralité de caractéristiques de ce signal, telles que par exemple la phase $\hat{\phi}$, la fréquence Doppler $\hat{f}_{doppler}$, les symboles démodulés $\widehat{b_k}$, le retard Doppler $\hat{\tau}$ ou l'indicateur de rapport signal sur bruit.

Le traitement choisi dépend notamment du type des signaux reçus. Ainsi, par exemple :

- pour les signaux TM de type DVBS2, CCSDS, la démodulation classique est utilisée, et les bits (ou symboles) démodulés sont utilisés pour construire le signal de référence lors de l'étape suivante ;
- pour les signaux de type CDMA (typiquement, les signaux GNSS), la corrélation classiquement effectuée pour poursuivre l'évolution du retard et de phase est appliquée à l'identique sur toutes les antennes pour calculer la première corrélation expliquée en détail ci-dessous ;
- si une partie du signal est connue (par exemple un mot de synchronisation non codée), alors une poursuite du mot de synchronisation sur le signal post-formation de faisceau est effectuée, afin de piloter les corrélations sur ce mot de synchronisation dans le signal reçu.

Lors d'une étape 114, l'unité d'estimation 24 estime une nouvelle loi de phase w pour l'itération suivante (c'est-à-dire pour l'instant t+1) à partir des caractéristiques du signal résultant déterminées lors de l'étape 113 et des signaux élémentaires $y_{BF}(t)$.

Cette étape 114 comprend avantageusement plusieurs sous-étapes.

Lors d'une première sous-étape 121, l'unité d'estimation 24 détermine une première corrélation r correspondant à la corrélation entre les signaux élémentaires $y(t)$ et un signal de référence $y_{ref}(t)$. En particulier, cette première corrélation $r$ est déterminée selon l'expression suivante :

$$r = E\big[y(t)y_{ref}(t)^*\big] = \int_{T_{int}} y(t)y_{ref}(t)^* \, dt$$

où

$E$ désigne une espérance mathématique ;
* désigne un opérateur conjugué .

Le signal de référence $y_{ref}(t)$ est déterminé à partir desdites caractéristiques du signal résultant.

En particulier, la forme exacte du signal de référence $y_{ref}(t)$ est choisie en fonction du type de signal reçu et en fonction du traitement monocanal effectué lors de l'étape 113. En outre, pour les signaux de type GNSS, un code d'étalement C d'au moins un satellite poursuivi peut être utilisé.

Lors d'une deuxième sous-étape 122, l'unité d'estimation 24 détermine une deuxième corrélation $R$ correspondant à l'autocorrélation des signaux élémentaires.

En particulier, cette deuxième corrélation $R$ est déterminée selon l'expression suivante :

$$R = E\big[y(t)y(t)^H\big].$$

Lors d'une troisième sous-étape 123, l'unité d'estimation 24 détermine la nouvelle loi de phase $w$ à partir de la première corrélation $r$ et de la deuxième corrélation $R$ comme suit :

$$w = R^{-1}r.$$

Cette nouvelle loi de phase $w$ est alors utilisée pour une nouvelle itération des étapes 111 à 114 (c'est-à-dire pour l'instant t+1).

On conçoit alors que la présente invention présente un certain nombre d'avantages.

En particulier, l'invention permet de corriger toutes les effets perturbateurs (couplage, antennaire ...), et non uniquement ceux des éléments RF.

L'invention permet en outre de s'intégrer de manière naturelle dans les solutions monocanales existantes. Elle rend également possible l'utilisation des codes correcteurs au bénéfice de la formation de faisceaux.

L'invention permet en outre de mettre en œuvre un calcul parallèle en utilisant l'indépendance d'au moins certaines étapes. Enfin, l'invention ne nécessite aucune intervention de l'utilisateur, l'approche étant transparente et comparable à une solution mono-antenne. Elle présente également un coût réduit par rapport aux autres solutions connues.

Plusieurs exemples de traitement monocanal sont aptes à être appliqués sur le signal post-formation de faisceau.

Si le signal est de type GNSS (de l'anglais « *Global Navigation Satellite System* »), typiquement CDMA (de l'anglais « *Code Division Multiple Access*»), le traitement monocanal comporte par exemple une poursuite de l'évolution du retard et de la phase par boucle DLL (de l'anglais « *Delay-Locked Loop* ») ou PLL/FLL (de l'anglais « *Phase-Locked Loop* » et « *Frequency-Locked Loop* »).

Toutes ces corrélations seront appliquées à l'identique sur toutes les antennes (i.e. sur les signaux collectés par les m antennes) pour calculer la première corrélation r et donc, la loi de phase à l'instant suivant.

Si les signaux sont des signaux de télémesure de type DVB-S2 (de l'anglais « *Digital Video Broadcasting - Satellite - Second Generation* »), CCSDS (de l'anglais « *Consultative Committee for Space Data Systems* »), le traitement monocanal est par exemple une démodulation du signal post-formation de faisceau comportant une poursuite du début du symbole, une estimation des symboles, une estimation des bits, et une utilisation des codes correcteurs pour corriger les bits, afin de retrouver les bits transmis. Ces derniers seront utilisés pour reconstruire le signal synthétique de référence $y_{ref}(t)$ afin de réaliser les corrélations sur les signaux reçus par les m antennes pour calculer r et donc la loi de phase à l'instant suivant.

Si une partie du signal est connu, par exemple un mot de synchronisation non codé, la démodulation du signal post-formation de faisceau comporte alors en outre une poursuite du mot de synchronisation sur le signal post-formation de faisceau, c'est-à-dire une estimation du retard et de la phase par DLL et PLL/FLL, afin de piloter les corrélations sur ce mot de synchronisation dans les signaux reçus par les m antennes $y(t)$.

L'utilisation du traitement monocanal post formation de faisceau pour établir la loi de phase permet de ne pas avoir à travailler avec des signaux élémentaires calibrés. De plus, la méthode selon l'invention ne nécessite pas de connaitre a priori la direction de signaux d'intérêt ou de directions d'arrivées, ni d'intégrer une étape de calibration.

**Revendications**

1. Procédé de réception de signaux RF par un réseau d'antennes (21) comprenant m antennes (30), le procédé comprenant les étapes suivantes mises en œuvre à chaque instant t :

   - réception (111) de m signaux élémentaires par les m antennes (30) ;
   - formation (112) d'un signal résultant à partir des m signaux élémentaires en utilisant une loi de phase déterminée pour l'instant t ;
   - traitement (113) monocanal du signal résultant pour déterminer une pluralité de caractéristiques de ce signal ;
   - estimation (114) d'une nouvelle loi de phase pour l'instant t+1 à partir des caractéristiques du signal résultant et des signaux élémentaires.

2. Procédé selon la revendication 1, dans lequel chaque caractéristique du signal résultant correspond à l'un des éléments choisi dans le groupe comprenant :

   - phase ;
   - fréquence Doppler ;
   - démodulation des symboles ;
   - retard Doppler ;
   - indicateur de rapport signal sur bruit.

3. Procédé selon la revendication 1 ou 2, dans lequel l'étape d'estimation (114) de la nouvelle loi de phase comprend les sous-étapes suivantes :

   - détermination (121) d'une première corrélation correspondant à la corrélation entre les signaux élémentaires et un signal de référence ;
   - détermination (122) d'une deuxième corrélation correspondant à l'autocorrélation des signaux élémentaires ;
   - détermination (123) de la nouvelle loi de phase à partir de la première corrélation et de la deuxième corrélation.

4. Procédé selon la revendication 3, dans lequel le signal de référence est déterminé à partir desdites caractéristiques du signal résultant.

5. Procédé selon l'une quelconque des revendications précédentes, dans lequel la nouvelle loi de phase est déterminée en outre en fonction d'un code d'étalement d'un satellite poursuivi.

6. Procédé selon l'une quelconque des revendications précédentes, dans lequel l'étape d'estimation (114) de la nouvelle loi de phase est effectuée par une unité MMSE (24).

7. Procédé selon l'une quelconque des revendications précédentes, dans lequel lors d'une itération initiale desdites étapes, la nouvelle loi de phase est déterminée en fonction d'une fréquence Doppler recherchée.

8. Procédé selon la revendication 7, dans lequel ladite fréquence Doppler est déterminée à partir des éphémérides d'au moins un satellite poursuivi.

9. Programme d'ordinateur comportant des instructions logicielles qui, lorsqu'elles sont exécutées par un ordinateur, mettent en œuvre le procédé selon l'une quelconque des revendications précédentes.

10. Dispositif de réception de signaux RF (10) comprenant des moyens techniques (21, 22, 23, 24) mettant en œuvre le procédé selon l'une quelconque des revendications 1 à 8.

FIG.1

FIG.2

Europäisches
Patentamt

European
Patent Office

Office européen
des brevets

## RAPPORT DE RECHERCHE EUROPEENNE

Numéro de la demande

EP 25 18 1769

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 6 130 643 A (TRIPPETT JOHN M [US] ET AL) 10 octobre 2000 (2000-10-10) * figures 1,2 * * colonne 4, alinéas 3,4 * * colonne 5, alinéa 3 - colonne 6, alinéa 1 * * colonne 3, alinéa 2 * ----- | 1-10 | INV. H04B7/06 H04B7/08 |

DOMAINES TECHNIQUES RECHERCHES (IPC)

H04B
G01S

Le présent rapport a été établi pour toutes les revendications

| Lieu de la recherche | Date d'achèvement de la recherche | Examinateur |
|---|---|---|
| Munich | 19 septembre 2025 | Panahandeh, Ali |

EPO FORM 1503 03.82 (P04C02)

EP 4 664 785 A1

## ANNEXE AU RAPPORT DE RECHERCHE EUROPEENNE
## RELATIF A LA DEMANDE DE BREVET EUROPEEN NO.

EP 25 18 1769

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-09-2025

| Document brevet cité au rapport de recherche | Date de publication | Membre(s) de la famille de brevet(s) | Date de publication |
|---|---|---|---|
| US 6130643 A | 10-10-2000 | GB 2361825 A | 31-10-2001 |
| | | US 6130643 A | 10-10-2000 |

Pour tout renseignement concernant cette annexe : voir Journal Officiel de l'Office européen des brevets, No.12/82

10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3544193 A
- EP 2356754 A
- EP 1816758 A